# EUROPÄISCHE PATENTSCHRIFT

(11) **EP 3 425 175 B1**
(45) Veröffentlichungstag und Bekanntmachung des Hinweises auf die Patenterteilung: **01.12.2021**
(21) Anmeldenummer: 18181649.7
(22) Anmeldetag: 04.07.2018
(51) Int. Cl.: F01D 25/24, F01D 25/16, F01D 9/02, F01D 9/04, F01D 25/30, F02K 1/04

(54) **GASTURBINE MIT EINER SCHNELLLAUFENDEN NIEDERDRUCKTURBINE UND EINEM TURBINENGEHÄUSE**
GAS TURBINE WITH A FAST RUNNING LOW PRESSURE TURBINE AND A TURBINE HOUSING
TURBINE À GAZ DOTÉE D'UNE TURBINE BASSE PRESSION À RÉGIME RAPIDE ET D'UN BOÎTIER DE TURBINE

(30) Priorität: 07.07.2017 DE 102017211649
(43) Veröffentlichungstag der Anmeldung: 09.01.2019
(73) Patentinhaber: MTU Aero Engines AG, 80995 München (DE)
(72) Erfinder: Ramm, Günter, 82223 Eichenau (DE); Schaber, Reinhold, Ottobrunn 85521 (DE)

(56) Entgegenhaltungen:
- WO-A2-2018/026408
- US-A1- 2013 219 859
- US-A1- 2016 195 019

## Beschreibung

Die Erfindung betrifft eine Gasturbine, umfassend eine schnelllaufende Niederdruckturbine und ein Turbinengehäuse.

Eine Gasturbine mit einem sogenannten Getriebefan zeichnet sich dadurch aus, dass die Baukomponenten Fan und Niederdruckturbine nicht mehr auf einer gemeinsamen Welle sitzen, sondern durch ein Getriebe gekoppelt sind. Wenn der durch die Niederdruckturbine angetriebene Fan oder ein durch die Niederdruckturbine angetriebenes Flügelrad im Betrieb der Gasturbine langsamer dreht als die Niederdruckturbine, wird diese als schnelllaufende Niederdruckturbine bezeichnet. Bei schnelllaufenden Niederdruckturbinen von Gasturbinen wird ein sogenanntes Austrittsleitgitter stromab des stromabwärtigsten Rotors der Niederdruckturbine eingesetzt, um vor dem Austritt des Betriebsfluids aus einem Turbinengehäuse den Drall aus der Strömung herauszunehmen. Das Austrittsleitgitter ist ein stromabwärtigstes bzw. in Durchströmungsrichtung des Betriebsfluids letztes von einem oder mehreren in Durchströmungsrichtung der Turbine axial hintereinander angeordneten Gittern der Turbine. Das Austrittsleitgitter kann insbesondere als sogenanntes Turbinenaustritts-Nachleitrad ausgebildet sein. Ein solches Turbinengehäuse wird daher auch als Turbinenaustrittsgehäuse ("turbine exit case", TEC) bezeichnet. Neben strukturellen Aspekten dient ein TEC beispielsweise in Flugtriebwerken in erster Linie dazu, im Reiseflug drallfreie Abströmung und damit eine gute Schubausbeute zu gewährleisten.

Der durch das Austrittsgitter entstehende Druckverlust führt aber zu einer Erhöhung des Brennstoffverbrauches. Darüber hinaus handelt es sich bei solchen Austrittsleitgittern um vergleichsweise schwere Bauteile, die entsprechend stabile Lagerstrukturen benötigen und außerdem durch ihre verhältnismäßig geringe Schaufelzahl akustische Probleme bereiten.

Gasturbinen ohne Austrittsgehäuse sind aus den Dokumenten US20160195019A1 und US20130219859A1 bekannt. Des Weiteren wird auch noch auf die WO2018026408A2 hingewiesen.

Aufgabe der vorliegenden Erfindung ist es, eine gattungsgemäße Gasturbine mit einem geringeren Gewicht und einem verbesserten Brennstoffverbrauch und Lärmabstrahlverhalten zu schaffen.

Die Aufgabe wird erfindungsgemäß durch eine Gasturbine den Merkmalen des Patentanspruchs 1 gelöst. Vorteilhafte Ausgestaltungen mit zweckmäßigen Weiterbildungen der Erfindung sind in den Unteransprüchen angegeben.

Eine Gasturbine, welche ein geringeres Gewicht sowie einen verbesserten Brennstoffverbrauch und ein verbessertes Lärmabstrahlverhalten aufweist, ist erfindungsgemäß dadurch geschaffen, dass der Austrittsbereich des Turbinengehäuses austrittsleitgitterfrei ausgebildet ist. Mit anderen Worten weist die Gasturbine erfindungsgemäß kein Austrittsleitgitter oder Nachleitrad auf. Wie sich überraschenderweise herausgestellt hat, führt der Verzicht auf ein Austrittsleitgitter zwar zunächst zu etwas geringeren Wirkungsgraden der gesamten Gasturbine, da die Abströmung aus der Niederdruckturbine ohne entsprechende Gegenmaßnahmen einen höheren Drall aufweist. Dieser Wirkungsgradverlust wird aber durch den Wegfall des Druckverlustes des Austrittsleitgitters zumindest im Wesentlichen kompensiert. Weitere Verbrauchsverbesserungen ergeben sich aufgrund der Gewichtseinsparung durch den Wegfall des Austrittsleitgitters und der Möglichkeit, auch die dafür benötigten Lagerstrukturen einzusparen. Zusätzlich ergeben sich unerwarteter Weise auch Vorteile im akustischen Verhalten der Gasturbine. Durch den Wegfall des Austrittsleitgitter verringern sich zudem die Einschränkungen in Anzahl und Ausgestaltung der Laufschaufeln des letzten bzw. stromabwärtigsten Rotors der Niederdruckturbine, wodurch ebenfalls unerwartete Wirkungsgradsteigerungen mit entsprechend reduziertem Brennstoffverbrauch realisierbar sind. Die Gasturbine kann beispielsweise als Flugtriebwerk oder als stationäre Turbine ausgebildet sein.

In einer vorteilhaften Ausgestaltung der Erfindung ist die Gasturbine als Mantelstromflugtriebwerk ausgebildet. Bei einem Mantelstromflugtriebwerk, das auch als Nebenstromtriebwerk bezeichnet wird, ummantelt ein äußerer oder sekundärer Fluidstrom einen inneren Primär- oder Kernstrom, der am eigentlichen thermodynamischen Kreisprozess der Gasturbine teilnimmt und zu welchem auch die schnelllaufende Niederdruckturbine als Teil des Kerntriebwerks beiträgt. Der Mantelstrom verringert die Geschwindigkeit des Betriebsfluids, wodurch im Betrieb ein geringere Treibstoffverbrauch und geringere Schallemissionen gegenüber einem Einstrom-Strahltriebwerk gleicher Schubkraft realisiert werden.

In einer weiteren vorteilhaften Ausgestaltung der Erfindung ist vorgesehen, dass die Gasturbine ein Nebenstromverhältnis von Nebenstrom zu Primärstrom von mindestens 1,5:1 aufweist. Der Primärstrom ist dabei der innere Strom des Betriebsfluids, während der Nebenstrom auch Sekundärstrom oder äußerer Strom genannt wird. Sekundär- und Primärstrom zusammen bewirken den Gesamtschub. Da das Kerntriebwerk in einem Mantelstromflugtriebwerk mit steigendem Nebenstromverhältnis immer weniger zum Gesamtschub der Strömungsmaschine beiträgt, beeinträchtigen Verluste im Kernstrom nach der Niederdruckturbine den Gesamtverbrauch der Strömungsmaschine kaum. Unter einem Nebenstromverhältnis von mindestens 1,5:1 sind Nebenstromverhältnisse von 1,5:1, 2,0:1, 2,5:1, 3,0:1, 3,5:1, 4,0:1, 4,5:1, 5,0:1, 5,5:1, 6,0:1, 6,5:1, 7,0:1, 7,5:1, 8,0:1, 8,5:1, 9,0:1, 9,5:1, 10,0:1, 10,5:1, 11,0:1, 11,5:1, 12,0:1, 12,5:1, 13,0:1, 13,5:1, 14,0:1, 14,5:1, 15,0:1 oder größer zu verstehen. Daher wirken sich Verluste im Kernstrom weniger auf den Gesamtverbrauch der Gasturbine aus.

Eine Gasturbine nach Patentanspruch 1 umfasst einen rotierbaren Austrittskonus (Core Cowl) im Bereich der schnelllaufenden Niederdruckturbine. Dieser erlaubt es beim Wegfall eines Nachleitgitters eine sprunghafte bzw. abrupte Änderung des Austrittsquerschnitts des Strömungskanals zu vermeiden und diesen stattdessen kontinuierlich zu erweitern. Dadurch kann die Austrittsströmung ablösefrei oder zumindest nahezu ablösefrei verzögert werden, wodurch der Wirkungsgrad weiter verbessert werden kann.

In einer weiteren vorteilhaften Ausgestaltung der Erfindung weist die Gasturbine einen Fan auf, der über ein Untersetzungsgetriebe mit der schnelllaufenden Niederdruckturbine gekoppelt ist. Durch Wahl eines geeigneten Untersetzungsverhältnisses können der Fan und die schnelllaufende Niederdruckturbine während des Betriebs der Gasturbine mit Hilfe des Untersetzungsgetriebes in ihrem jeweiligen physikalischen Optimum laufen, wodurch Treibstoff gespart und der Geräuschpegel reduziert werden. Die zusätzliche Masse des Untersetzungsgetriebes wird durch eine geringere Masse der schnelllaufenden Turbine wettgemacht.

In einer weiteren vorteilhaften Ausgestaltung der Erfindung ist vorgesehen, dass die schnelllaufenden Niederdruckturbine bezüglich des Strömungspfads des Betriebsfluids stromabwärts einer Brennkammer und/oder stromabwärts einer ein- oder mehrstufigen Hoch- oder Mitteldruckturbine angeordnet ist. Durch die Verwendung von zwei oder mehr Teilturbinen können entsprechend große Leistungen realisiert werden.

Weitere Vorteile ergeben sich, indem die schnelllaufende Niederdruckturbine als ein- oder mehrstufige Niederdruckturbine ausgebildet ist. Hierdurch kann die Turbine optimal an ihren jeweiligen Einsatzzweck angepasst werden.

In einer weiteren vorteilhaften Ausgestaltung der Erfindung ist vorgesehen, dass der bezüglich der Durchströmungsrichtung des Betriebsfluids stromabwärtigste Rotor derart ausgebildet ist, dass im Betrieb der Gasturbine ein mittlerer Austrittsdrallwinkel des Betriebsfluids höchstens ±15 ° bezogen auf eine Axiale der schnelllaufenden Niederdruckturbine beträgt. Mit anderen Worten ist es vorgesehen, dass der in Strömungsrichtung betrachtet stromabwärtigste bzw. letzte Rotor derart ausgebildet ist, dass sich während des bestimmungsgemäßen Betriebs der schnelllaufenden Turbine ein möglichst geringer mittlerer Austrittsdrallwinkel von höchsten ±15 °, das heißt beispielsweise von ±15 °, ±14 °, ±13 °, ±12 °, ±11 °, ±10 °, ±9 °, ±8 °, ±7 °, ±6 °, ±5 °, ±4 °, ±3 °, ±2 °, ±1 ° oder weniger bezogen auf die Axiale der Turbine bzw. auf die Drehachse des Rotors ergibt.

Weitere Merkmale der Erfindung ergeben sich aus den Ansprüchen, den Figuren und der Figurenbeschreibung. Die vorstehend in der Beschreibung genannten Merkmale und Merkmalskombinationen, sowie die nachfolgend in der Figurenbeschreibung genannten und/oder in den Figuren alleine gezeigten Merkmale und Merkmalskombinationen sind nicht nur in der jeweils angegebenen Kombination, sondern auch in anderen Kombinationen verwendbar, ohne den Rahmen der Erfindung zu verlassen. Es sind somit auch Ausführungen von der Erfindung als umfasst und offenbart anzusehen, die in den Figuren nicht explizit gezeigt und erläutert sind, jedoch durch separierte Merkmalskombinationen aus den erläuterten Ausführungen hervorgehen und erzeugbar sind. Es sind auch Ausführungen und Merkmalskombinationen als offenbart anzusehen, die somit nicht alle Merkmale eines ursprünglich formulierten unabhängigen Anspruchs aufweisen. Es sind darüber hinaus Ausführungen und Merkmalskombinationen, insbesondere durch die oben dargelegten Ausführungen, als offenbart anzusehen, die über die in den Rückbezügen der Ansprüche dargelegten Merkmalskombinationen hinausgehen oder von diesen abweichen. Dabei zeigt:
- Fig. 1: einen schematischen Querschnitt einer nicht-erfindungsgemäßen Gasturbine;
- Fig. 2: eine schematische Darstellung eines Austrittsbereichs der Gasturbine gemäß dem in Fig. 1 gezeigten Bereich A;
- Fig. 3: eine schematische Darstellung des Austrittsbereichs einer erfindungsgemäßen Gasturbine; und
- Fig. 4: ein Diagramm, in welchem eine Verbrauchsänderung in Prozent unterschiedlicher Strömungsmaschinen auf der Ordinate gegen einen Austrittsdrall eines Betriebsfluids in Grad gegenüber einer Axialen der Gasturbine aufgetragen ist.

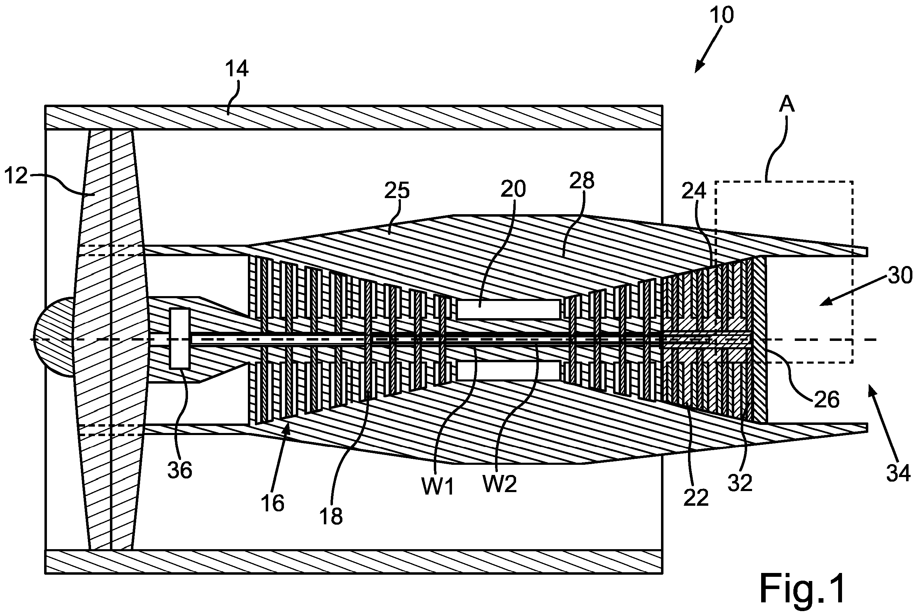

**Fig. 1** zeigt einen schematischen Querschnitt einer nicht-erfindungsgemäßen Gasturbine 10, welche vorliegend als Flugtriebwerk ausgebildet ist. Die Gasturbine 10 umfasst einen Fan 12, welcher in einem Fangehäuse 14 angeordnet ist. In Strömungsrichtung des Betriebsfluids betrachtet schließen sich an den Fan 12 ein Niederdruckverdichter 16, ein Hochdruckverdichter 18, eine Brennkammer 20, eine Hochdruckturbine 22, eine Niederdruckturbine 24 und ein Austrittsleitgitter 26 an. Der Niederdruckverdichter 16 und der Hochdruckverdichter 18 sind in einem Verdichtergehäuse 25 angeordnet, während die Hochdruckturbine 22 und die Niederdruckturbine 24 in einem Turbinengehäuse 28 angeordnet sind. Das Verdichtergehäuse 25 und das Turbinengehäuse 28 begrenzen zusammen einen Strömungspfad des Betriebsfluids der Gasturbine 10. Das Turbinengehäuse 28 weist seinerseits einen Austrittsbereich 30 auf, der sich zwischen einem in Durchströmungsrichtung des Betriebsfluids stromabwärtigsten Rotor 32 der Niederdruckturbine 24 und einer Austrittsöffnung 34 des Turbinengehäuses 28 erstreckt. Weiterhin umfasst die Gasturbine 10 ein Untersetzungsgetriebe 36, über welches der Fan 12 mit der Niederdruckturbine 24 gekoppelt ist, so dass die Niederdruckturbine 24 auch als schnelllaufende Niederdruckturbine 24 bezeichnet werden kann.

Während des Betriebs der als Mantelstromflugtriebwerk ausgebildeten Gasturbine 10 setzt sich der Gesamtschub aus dem Primärstrom, das heißt dem inneren, durch das Verdichtergehäuse 25 und das Turbinengehäuse 28 geleiteten Strom des Betriebsfluids, und dem Nebenstrom zusammen, wobei der Nebenstrom auch Sekundärstrom oder äußerer Strom genannt wird und entlang des Strömungspfads fließt, der durch das Fangehäuse 14 einerseits und durch das Verdichtergehäuse 25 und Turbinengehäuse 28 andererseits gebildet wird.

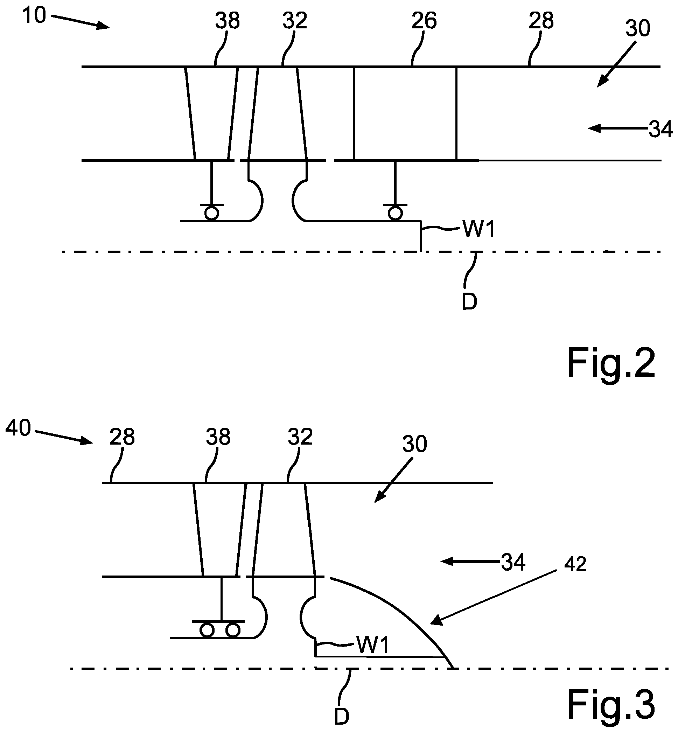

**Fig. 2** zeigt eine schematische Darstellung des Austrittsbereichs 30 der Gasturbine 10 gemäß dem in Fig. 1 gezeigten Bereich A. Man erkennt insbesondere ein bezüglich des Turbinengehäuses 28 ortsfestes Leitrad 38, an welchem eine Welle W1 drehbar gelagert ist, den stromabwärtigsten, mit der Welle W1 verbundenen Rotor 32 bzw. das stromabwärtigste Laufrad 32 der Niederdruckturbine 24 sowie das im Turbinengehäuse 28 angeordnete Austrittsleitgitter 26, das auch als Nachleitrad bezeichnet wird. Die Welle W1, welche eine Dreh- bzw. Mittelachse D der Gasturbine 10 definiert, ist drehbar am Austrittsleitgitter 26 gelagert, welches seinerseits ebenfalls ortsfest am Turbinengehäuse 28 angeordnet ist.

**Fig**. 3 zeigt eine schematische Darstellung des Austrittsbereichs 30 einer erfindungsgemäßen Gasturbine 40. Der Aufbau der erfindungsgemäßen Gasturbine 40 entspricht grundsätzlich demjenigen der in Fig. 1 und Fig. 2 gezeigten Gasturbine 10. Im Unterschied zur Gasturbine 10 ist aber der Austrittsbereich 30 der Gasturbine 40 austrittsleitgitterfrei ausgebildet. Mit anderen Worten ist kein Austrittsleitgitter oder Nachleitrad 26 im Austrittsbereich 30 zwischen dem stromabwärtigsten Rotor 32 und der Austrittsöffnung 34 vorgesehen. Stattdessen ist der bezüglich der Durchströmungsrichtung des Betriebsfluids stromabwärtigste Rotor 32 derart ausgebildet, dass im Betrieb der Gasturbine 40 ein mittlerer Austrittsdrallwinkel des Betriebsfluids höchstens ±15 ° bezogen auf eine Axiale (D) der schnelllaufenden Niederdruckturbine 24 beträgt. Weiterhin weist die Gasturbine 40 ein Nebenstromverhältnis von mindestens 1,5:1, also beispielsweise von 1,5:1, 2,0:1, 2,5:1, 3,0:1, 3,5:1, 4,0:1, 4,5:1, 5,0:1, 5,5:1, 6,0:1, 6,5:1, 7,0:1, 7,5:1, 8,0:1, 8,5:1, 9,0:1, 9,5:1, 10,0:1, 10,5:1, 11,0:1, 11,5:1, 12,0:1, 12,5:1, 13,0:1, 13,5:1, 14,0:1, 14,5:1, 15,0:1 oder mehr auf. Damit wirken sich etwaige Verluste im Primärstrom weniger auf den Gesamtverbrauch der Gasturbine 40 aus.

Um den Wirkungsgrad weiter zu verbessern, umfasst die erfindingsgemäße Gasturbine 40 weiterhin einen rotierbaren Austrittskonus 42 der auch als "Core Cowl" bezeichnet werden kann. Dieser erlaubt es eine sprunghafte bzw. abrupte Änderung des Austrittsquerschnitts des Strömungskanals zu vermeiden und diesen stattdessen kontinuierlich zu erweitern. Dadurch kann die Austrittsströmung ablösefrei oder zumindest nahezu ablösefrei verzögert werden, wodurch der Wirkungsgrad weiter verbessert werden kann.

Der Austrittskonus 42 kann - wie dargestellt - ein Teil des Rotors sein und/oder fest mit einem axial letzten Laufschaufelkranz der Niederdruckturbine 24 verbunden sein. Demnach kann der Austrittskonus 42 einheitlich und gemeinsam mit dem letzten Laufschaufelkranz der Niederdruckturbine 24 mitrotieren.

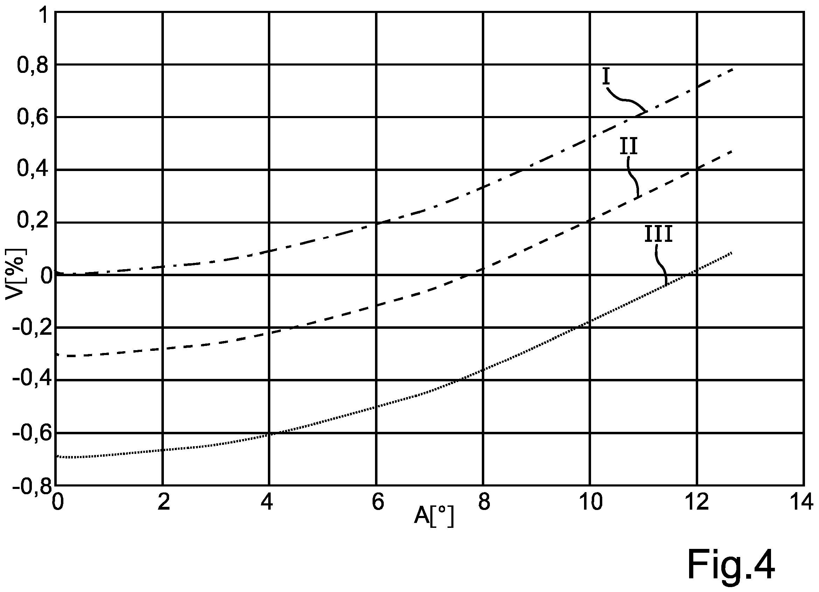

**Fig. 4** zeigt ein Diagramm, in welchem eine Verbrauchsänderung V [%] unterschiedlicher Gasturbinen 10, 40 auf der Ordinate gegen einen Austrittsdrall A [°] eines Betriebsfluids gegenüber einer Axialen (D) der betreffenden Gasturbine 10, 40 aufgetragen ist. Die gepunktete Kurve I zeigt dabei den Effekt einer nicht-drallfreien Abströmung auf den Verbrauch im Reiseflug exemplarisch für eine nicht-erfindungsgemäße und als Turbofanflugtriebwerk ausgebildete Gasturbine 10, welche eine schnelllaufende Niederdruckturbine 24 mit Austrittsleitgitter 26 umfasst.

Die strichlierte mittlere Kurve II zeigt den gleichen Zusammenhang wie die obere Kurve I, jedoch für eine als Turbofanflugtriebwerk ausgebildete erfindungsgemäße Gasturbine 40, welche eine schnelllaufende Niederdruckturbine 24 ohne Austrittsleitgitter 26 bzw. ohne TEC umfasst. Man erkennt, dass durch den Wegfall des Druckverlusts aufgrund des Fehlens des Austrittleitgitters 26 und unter Vernachlässigung anderer Effekte bei einem Abströmdrallwinkel von etwa 8 ° ein vergleichbarer Verbrauch wie bei der nicht-erfindungsgemäßen Gasturbine 10 (Kurve I) erzielt werden kann.

Berücksichtigt man zusätzlich den Effekt des wegfallenden Gewichts des TECs bzw. des Austrittleitgitters 26, beispielsweise für eine Neuauslegung der Gasturbine 40, so erhält man eine weitere Kraftstoffeinsparung von ca. 0,4 %. Die wird durch die untere, strichpunktiert gezeigte Kurve III (ohne TEC-Druckverlust und -Gewicht) verdeutlicht. Selbst bei einem Abströmdrallwinkel von etwa 12 ° würden immer noch bei gleichem Verbrauch die Herstellkosten für das TEC bzw. das Austrittsleitgitter 26 entfallen. Durch Wegfall des TECs ist es vorteilhaft, einen Austrittskonus (Core-Cowl, nicht gezeigt) der schnelllaufenden Niederdruckturbine 24 bzw. der Gasturbine 40 rotierend auszuführen.

### Bezugszeichenliste:

- 10: Gasturbine (nicht-erfindungsgemäß)
- 12: Fan
- 14: Fangehäuse
- 16: Niederdruckverdichter
- 18: Hochdruckverdichter
- 20: Brennkammer
- 22: Hochdruckturbine
- 24: Niederdruckturbine
- 25: Verdichtergehäuse
- 26: Austrittsleitgitter
- 28: Turbinengehäuse
- 30: Austrittsbereich
- 32: Rotor
- 34: Austrittsöffnung
- 36: Untersetzungsgetriebe
- 38: Leitrad
- 40: Gasturbine (erfindungsgemäß)
- 42: rotierbarer Austrittskonus
- D: Drehachse
- W1: Welle
- I: Gasturbine mit schnelllaufender Niederdruckturbine mit Austrittsleitgitter
- II: Gasturbine mit schnelllaufender Niederdruckturbine ohne Austrittsleitgitter
- III: Gasturbine mit schnelllaufender Niederdruckturbine ohne Austrittsleitgitter unter Berück-sichtigung von Gewichtseinsparungen

## Patentansprüche

1. Gasturbine (40), umfassend eine schnelllaufende Niederdruckturbine (24) zum Antreiben eines Fans oder Flügelrads, der bzw. das im Betrieb langsamer dreht als die Niederdruckturbine, und ein Turbinengehäuse (28), welches einen Strömungspfad eines Betriebsfluids der Gasturbine (40) begrenzt und einen Austrittsbereich (30) aufweist, der sich zwischen einem in Durchströmungsrichtung des Betriebsfluids stromabwärtigsten Rotor (32) der schnelllaufenden Niederdruckturbine (24) und einer Austrittsöffnung (34) des Turbinengehäuses (28) erstreckt, wobei der Austrittsbereich (30) austrittsleitgitterfrei ausgebildet ist,
**dadurch gekennzeichnet, dass**
die Gasturbine (40) im Bereich der schnelllaufenden Niederdruckturbine (24) einen rotierbaren Austrittskonus (42) umfasst.

2. Gasturbine (40) nach Anspruch 1,
**dadurch gekennzeichnet, dass**
diese als Mantelstromflugtriebwerk ausgebildet ist.

3. Gasturbine (40) nach Anspruch 2,
**dadurch gekennzeichnet, dass**
diese ein Nebenstromverhältnis von Nebenstrom zu Primärstrom von mindestens 1,5:1 aufweist.

4. Gasturbine (40) nach einem der Ansprüche 1 bis 3,
**dadurch gekennzeichnet, dass**
diese einen Fan (12) aufweist, der über ein Untersetzungsgetriebe (36) mit der schnelllaufenden Niederdruckturbine (24) gekoppelt ist.

5. Gasturbine (40) nach einem der Ansprüche 1 bis 4,
**dadurch gekennzeichnet, dass**
die schnelllaufenden Niederdruckturbine (24) bezüglich des Strömungspfads des Betriebsfluids stromabwärts einer Brennkammer (20) und/oder stromabwärts einer ein-oder mehrstufigen Hoch- oder Mitteldruckturbine (22) angeordnet ist.

6. Gasturbine (40) nach einem der Ansprüche 1 bis 5,
**dadurch gekennzeichnet, dass**
die schnelllaufende Niederdruckturbine (24) als ein- oder mehrstufige Niederdruckturbine (24) ausgebildet ist.

7. Gasturbine (40) nach einem der Ansprüche 1 bis 6,
**dadurch gekennzeichnet, dass**
der bezüglich der Durchströmungsrichtung des Betriebsfluids stromabwärtigste Rotor (32) derart ausgebildet ist, dass im bestimmungsgemäßen Betrieb der Gasturbine (40) ein mittlerer Austrittsdrallwinkel des Betriebsfluids höchstens ±15 ° bezogen auf eine Axiale (D) der schnelllaufenden Niederdruckturbine (24) beträgt.

## Claims

1. Gas turbine (40), comprising a high-speed low-pressure turbine (24) for driving a fan or impeller which rotates more slowly than the low-pressure turbine during operation, and a turbine housing (28) which delimits a flow path of an operating fluid of the gas turbine (40) and has an outlet region (30) which extends between a rotor (32) of the high-speed low-pressure turbine (24) which is most downstream in the flow direction of the operating fluid and an outlet opening (34) of the turbine housing (28), the outlet region (30) being without an outlet guide baffle,
**characterized in that**
the gas turbine (40) comprises a rotatable outlet cone (42) in the region of the high-speed low-pressure turbine (24).

2. Gas turbine (40) according to claim 1,
**characterized in that**
it is designed as a turbofan aircraft engine.

3. Gas turbine (40) according to claim 2,
**characterized in that**
it has a secondary flow ratio of secondary flow to primary flow of at least 1.5:1.

4. Gas turbine (40) according to any of claims 1 to 3,
**characterized in that**
it has a fan (12) which is coupled to the high-speed low-pressure turbine (24) via a reduction gear (36).

5. Gas turbine (40) according to any of claims 1 to 4,
**characterized in that**
the high-speed low-pressure turbine (24) is arranged downstream of a combustion chamber (20) and/or downstream of a single- or multi-stage high- or medium-pressure turbine (22) with respect to the flow path of the operating fluid.

6. Gas turbine (40) according to any of claims 1 to 5,
**characterized in that**
the high-speed low-pressure turbine (24) is designed as a single- or multi-stage low-pressure turbine (24).

7. Gas turbine (40) according to any of claims 1 to 6,
**characterized in that**
the rotor (32) which is most downstream with respect to the flow direction of the operating fluid is designed such that, when the gas turbine (40) is operated as intended, a mean outlet swirl angle of the operating fluid is at most ±15° with respect to an axial line (D) of the high-speed low-pressure turbine (24).

## Revendications

1. Turbine à gaz (40), comprenant une turbine basse pression (24) à régime rapide permettant d'entraîner un ventilateur ou une roue à aubes, lequel ou laquelle tourne plus lentement que la turbine basse pression pendant le fonctionnement, et un carter de turbine (28), lequel délimite un trajet d'écoulement d'un fluide de fonctionnement de la turbine à gaz (40) et comporte une zone de sortie (30), laquelle s'étend entre un rotor (32) de la turbine basse pression (24) à régime rapide, lequel est le plus en aval dans le sens d'écoulement du fluide de fonctionnement, et une ouverture de sortie (34) du carter de turbine (28), dans lequel la zone de sortie (30) est conçue dépourvue de grille directrice de sortie,
**caractérisée en ce**
**que** la turbine à gaz (40) comprend un cône de sortie (42) rotatif dans la zone de la turbine basse pression (24) à régime rapide.

2. Turbine à gaz (40) selon la revendication 1,
**caractérisée en ce**
**qu'**elle est conçue sous la forme de turboréacteur d'aéronef à soufflante canalisée.

3. Turbine à gaz (40) selon la revendication 2,
**caractérisée en ce**
**qu'**elle présente un rapport de débit secondaire du débit secondaire au débit primaire d'au moins 1,5 : 1.

4. Turbine à gaz (40) selon l'une quelconque des revendications 1 à 3,
**caractérisée en ce**
**qu'**elle comporte un ventilateur(12), lequel est accouplé à la turbine basse pression (24) à régime rapide par l'intermédiaire d'un démultiplicateur (36).

5. Turbine à gaz (40) selon l'une quelconque des revendications 1 à 4,
**caractérisée en ce**
**que** la turbine basse pression (24) à régime rapide est disposée en aval d'une chambre de combustion (20) et/ou en aval d'une turbine haute pression ou moyenne pression (22) à au moins un étage, par rapport au trajet d'écoulement du fluide de fonctionnement.

6. Turbine à gaz (40) selon l'une quelconque des revendications 1 à 5,
**caractérisée en ce**
**que** la turbine basse pression (24) à régime rapide est conçue sous la forme de turbine basse pression (24) à au moins un étage.

7. Turbine à gaz (40) selon l'une quelconque des revendications 1 à 6,
**caractérisée en ce**
**que** le rotor (32) le plus en aval par rapport au sens d'écoulement du fluide de fonctionnement est conçu de telle sorte que, lorsque la turbine à gaz (40) fonctionne comme prévu, un angle de tourbillon de sortie moyen du fluide de fonctionnement est d'au plus ± 15° par rapport à un axe (D) de la turbine basse pression (24) à régime rapide.
